(19) Europäisches Patentamt / European Patent Office / Office européen des brevets

(11) **EP 2 133 964 A1**

(12) **DEMANDE DE BREVET EUROPEEN**

(43) Date de publication:
**16.12.2009 Bulletin 2009/51**

(51) Int Cl.:
*H01S 3/102* *(2006.01)*   *H01S 3/094* *(2006.01)*
*H01S 3/16* *(2006.01)*

(21) Numéro de dépôt: **09000557.0**

(22) Date de dépôt: **16.01.2009**

| | |
|---|---|
| (84) Etats contractants désignés:<br>**AT BE BG CH CY CZ DE DK EE ES FI FR GB GR HR HU IE IS IT LI LT LU LV MC MK MT NL NO PL PT RO SE SI SK TR**<br>Etats d'extension désignés:<br>**AL BA RS**<br><br>(30) Priorité: **25.01.2008 FR 0800387** | (71) Demandeur: **Institut Franco-Allemand de Recherches de Saint-Louis**<br>**68300 Saint-Louis Cedex (FR)**<br><br>(72) Inventeurs:<br>• **Hirth, Antoine M.**<br>  **68680 Niffer (FR)**<br>• **Kieleck, Christelle**<br>  **68300 Saint-Louis (FR)** |

(54) **Procédé d'émission d'un rayonnement laser pulsé et source laser associée**

(57)  La présente invention concerne notamment le domaine des lasers et a plus particulièrement pour objet un procédé d'émission d'un rayonnement laser pulsé généré par au moins un cristal laser disposé dans une cavité comportant un premier et un second miroir et pompé par des moyens de pompage, caractérisé en ce qu'il comporte une première étape consistant à générer un premier rayonnement laser de pompage d'intensité $J_C$ apte à amener le cristal au moins au seuil d'émission laser et une seconde étape consistant à générer un second rayonnement laser de pompage d'intensité $J_P$ en forme d'échelon, ce deuxième rayonnement se superposant, au moins en partie au premier ou lui succédant immédiatement après, l'intensité $J_P$ étant, dans ce dernier cas, supérieure à celle $J_C$ du premier rayonnement ainsi qu'une source laser apte à mettre en oeuvre ce procédé.

Fig. 1

## Description

L'invention concerne notamment le domaine des lasers et a plus particulièrement pour objet un procédé d'émission d'un rayonnement laser pulsé ainsi qu'une source laser apte à fonctionner en régime pulsé à basse cadence du type comportant un cristal disposé dans une cavité laser et des moyens de pompage aptes à générer un rayonnement de type pulsé en direction de ce cristal.

Les sources laser solides pulsées de forte énergie par impulsion, en régime basse cadence de répétition (< 100 Hz), émettant vers 1 $\mu$m (Nd ou Yb) font partie de l'état de l'art. Pour leur pompage optique, les diodes pulsées s'avèrent très efficaces aussi bien pour un fonctionnement en mode relaxé que déclenché. Pour Nd: YAG par exemple, en mode pulsé relaxé, avec 200 $\mu$s de durée de pompage, la durée de l'émission est pratiquement identique à celle du pompage. A basse cadence (fréquence << 1/ , durée de vie du niveau supérieur), à chaque tir, après une oscillation transitoire de quelques $\mu$s à 10 $\mu$s, suivant le niveau de pompage, l'émission apparaît et suit le profil du pompage et l'énergie pulsée de la diode de pompe est transformée efficacement en énergie laser.

Il en va tout autrement pour les matériaux laser dopés Tm, Ho ou Er émettant vers 2 ou 3 $\mu$m. A basse cadence, le rendement de conversion de l'énergie pulsée de pompage $E_P$ en énergie laser $E_L$ est bien inférieur à celui obtenu en régime continu ou à haute cadence (> kHz)

Par exemple, pour Ho:YAG pompé à 1.91 $\mu$m en régime continu (CW)on obtient un rendement total supérieur à 50% et peut atteindre plus de 80% en régime pulsé à haute cadence c'est-à-dire pour une cadence supérieure au kHz. Par contre, en régime pulsé basse cadence (60 Hz) avec 5 ms de durée d'impulsion de pompage, le rendement obtenu est inférieur à 30% comme indiqué par exemple dans le document de Budni et Al. intitulé « Q-switched, 2.09-$\mu$m holmium laser resonantly pumped by a diode-pumped 1.9-$\mu$m thulium laser.

Il existe un grand intérêt pour les sources laser à 2 et 3 $\mu$m qui sont à sécurité oculaire et, d'une part, dont l'efficacité en mode CW est élevée lorsque le matériau est directement pompé par diodes et, d'autre part, qui donnent accès à l'infrarouge (IR) moyen. Ainsi, à partir d'une longueur d'onde laser de 2 $\mu$m, un seul oscillateur paramétrique optique (OPO) suffit pour obtenir une longueur d'onde dans la bande II. Mais à très basse cadence, en rafale, et surtout en tir unique, le rendement énergétique chute brutalement, et les énergies laser des impulsions successives varient. Or, pour certaines applications, militaires en particulier comme les contre-mesures optroniques (CMO), le régime de fonctionnement en rafale revêt une grande importance.

Pour lutter contre les autodirecteurs de missiles de première génération, le brouillage des signaux générés par le dispositif à réticule peut s'avérer suffisant si, par une boucle intelligente, le système à haute cadence ou en mode CW est capable de générer des séquences d'impulsions appropriées. Pour les autodirecteurs de génération plus récente, la seule solution consiste à endommager les détecteurs qui servent au guidage.

Le temps disponible pour traiter la menace étant limité, la source de CMO ne devra fournir qu'une série limitée d'impulsions pendant une fraction de seconde ou pendant quelques secondes. Les avantages système qui en résultent sont une réduction de la consommation électrique moyenne, un poids et un encombrement plus faibles. Mais de nouveaux problèmes apparaissent également :

- la source doit être prête à chaque instant,
- toutes les impulsions en nombre limité doivent être efficaces dès le début du déclenchement de la rafale.

Malgré les difficultés relevées plus haut, inhérentes aux sources pulsées basse cadence à 2 ou 3 $\mu$m par rapport à celles à 1 $\mu$m (Nd ou Yb), on continue à les privilégier pour leur efficacité pour aller dans l'IR moyen à l'aide d'un seul OPO.

Le but de l'invention est de résoudre les inconvénients précités en proposons une solution permettant, d'une part, d'accroître l'efficacité des sources à 2 $\mu$m pulsées basse cadence, et surtout fonctionnant par rafales en augmentant le rendement de conversion de l'énergie de pompage pulsée en énergie laser et de réduire ainsi le poids et l'encombrement de la source et, d'autre part de tirer parti de cet accroissement de rendement pour réduire la part d'énergie transformée en chaleur dans le milieu laser et diminuer les effets de la lentille thermique de façon à obtenir, avec la géométrie du barreau laser, le meilleur profil spatial du faisceau émis ($M^2$ le plus faible possible).

La solution proposée est d'une part un procédé d'émission d'un rayonnement laser pulsé généré par au moins un cristal laser disposé dans une cavité comportant un premier et un second miroirs et pompé par des moyens de pompage, **caractérisé en ce qu'**il comporte une première étape consistant à générer un premier rayonnement laser de pompage d'intensité $J_C$ apte à amener le cristal au moins au seuil d'émission laser et une seconde étape consistant à générer un second rayonnement laser de pompage d'intensité $J_P$ en forme d'échelon, ce deuxième rayonnement se superposant, au moins en partie au premier ou lui succédant immédiatement après, l'intensité $J_P$ étant, dans ce dernier cas, supérieure à celle $J_C$ du premier rayonnement.

Par immédiatement, il faut comprendre que le temps, qui les sépare ne doit pas amener le cristal en deçà de son seuil d'émission laser. Ainsi, on fait précéder ou on superpose, au pompage optique pulsé principal, un pompage auxiliaire continu, permanent, qui maintient le milieu laser dans un état d'inversion de population correspondant au seuil. De ce fait, la source est maintenue prête au fonctionnement avec une efficacité maximum dès le premier tir.

Selon une caractéristique particulière, un procédé d'émission laser selon l'invention est **caractérisé en ce que** la seconde étape consiste à superposer un second rayonnement laser de pompage d'intensité Jp en forme d'échelon au premier rayonnement.

Selon une autre caractéristique les premier et second rayonnements ont des longueurs d'onde différentes.

L'invention concerne aussi une source laser apte à générer des impulsions laser comportant des moyens de pompage aptes à pomper un cristal laser disposé dans une cavité délimitée par un premier et un second miroir, les moyens de pompage étant aptes à générer un rayonnement laser de pompage d'intensité $J_P$ en forme d'échelon, **caractérisé en ce que** les moyens de pompage sont aptes à générer un premier rayonnement laser de pompage d'intensité $J_C$ apte à amener le cristal au moins au seuil d'émission laser et une seconde étape consistant à générer un second rayonnement laser de pompage d'intensité $J_P$ en forme d'échelon, ce deuxième rayonnement se superposant, au moins en partie au premier ou lui succédant immédiatement après, l'intensité $J_P$ étant, dans ce dernier cas, supérieure à celle $J_C$ du premier rayonnement.

Selon une autre caractéristique, les moyens de pompage comportent des premiers moyens de pompage auxiliaires aptes à générer le premier rayonnement et des seconds moyens de pompage principaux aptes à générer ledit second rayonnement de pompage en forme d'échelon.

Selon une caractéristique particulière, une source selon l'invention comporte au moins l'une des caractéristiques suivantes :

- les premiers moyens de pompage sont aptes à générer un premier rayonnement laser de pompage continu,
- les moyens de pompage comportent au moins une diode laser,
- les premiers et seconds moyens de pompage sont aptes à générer des premier et second rayonnements laser de pompage ayant des longueurs d'onde différentes,
- le cristal comporte au moins trois faces et en ce que les moyens de pompages comportent des premier et second moyens de pompages aptes à générer lesdits premier et second rayonnements de pompage en direction d'une première face dudit cristal et au moins des troisième moyens de pompage aptes à générer au moins un troisième rayonnement de pompage en direction d'une seconde face dudit cristal,
- une lame séparatrice comportant au moins un face principale recouverte par un revêtement réfléchissant à ou aux longueurs d'onde des rayonnements de pompage et transparent pour une polarisation du rayonnement laser généré par le cristal, est disposée à l'intérieur de la cavité et apte à diriger ledit au moins troisième rayonnement laser en direction de ladite deuxième face du cristal,

- la cavité comporte plusieurs cristaux laser, chaque cristal ayant par exemple la forme d'un barreau,
- la cavité comporte plusieurs ensembles composés par un cristal et une lame séparatrice, cette dernière comportant au moins une face principale recouverte par un revêtement réfléchissant à ou aux longueurs d'onde des rayonnements de pompage et transparent, pour une polarisation, au rayonnement laser généré par le cristal,
- le cristal est constitué par l'un des cristaux suivants : YAG, YALO, $YVO_4$ ou YLF dopé au thulium ou à l'holmium.

A titre d'exemple un cristal en forme de barreau cylindrique comporte trois faces tandis qu'un cube en possède six.

Pour obtenir le meilleur profil spatial, on choisit une géométrie de barreau et une plage spectrale de pompage qui réduit au maximum la charge thermique par unité de volume et le stress mécanique associé.

De plus si le cristal est constitué par du Tm: YAG, le pompage se fait sur un pic d'absorption secondaire (805 nm pour Tm:YAG au lieu de 785.6 nm correspondant au maximum d'absorption) (wing pumping), ce qui conduit à utiliser des barreaux assez longs dans le cas du pompage coaxial.

- la géométrie du barreau doit se rapprocher le plus de celle d'un laser à fibre. Grâce au « wing pumping » le milieu amplificateur devient long, et on réduit le diamètre du barreau au minimum, de façon à pouvoir tenir le flux laser et à correspondre, pour une cavité résonante donnée, à l'extension du mode transverse fondamental (diamètre de 1.5 à 3 mm, dans une cavité de 20 à 50 cm).

Les paramètres spectroscopiques, en particulier les sections efficaces d'absorption et d'émission faibles et la durée de vie du niveau laser supérieur ( environ 10 ms) font apparaître en régime pulsé basse cadence, ou d'impulsion unique une différence importante entre la durée d'émission laser et celle de pompage. Dans l'état de la technique, la nécessité de renouveler presque totalement l'inversion de population conduit à une baisse importante du rendement.

Lorsqu'on accroît la cadence, les tirs successifs laissent derrière eux, lorsqu'on tombe en dessous du seuil d'émission, une partie non négligeable de l'inversion à la fin de l'impulsion de pompage, dont profitent les tirs suivants.

D'une manière préférentielle, le ou les barreaux de longueur de près de 100 mm ont leur surface latérale polie, et sont immergés dans un liquide de refroidissement à indice plus faible de façon à agir comme guides d'ondes pour la lumière de pompage et le faisceau laser. Avec la recherche du meilleur rapport surface d'échange sur volume on réduira les effets de lentille thermique. Le gain important résultant de la longueur du milieu laser permettra de réduire au minimum la puissance de la source de pompage continue.

D'autres avantages et caractéristiques de la présente invention apparaîtront dans la description de différentes variantes de réalisation de l'invention, en regard des figures annexées parmi lesquelles :

- La figure 1 présente un schéma d'une source laser selon un premier mode de réalisation de l'invention,

- La figure 2 montre un schéma de la superposition des premier et second rayonnements laser générés respectivement par des premiers et seconds moyens de pompage,

- La figure 3 présente un schéma d'un exemple de réalisation des moyens de pompage d'une source selon cette variante de réalisation de l'invention,

- La figure 4 montre un schéma de l'intensité I générée par un générateur électrique en fonction du temps et en vue de l'obtention desdits premier et second rayonnements laser,

- Les figures 5 et 6 présentent, en fonction du temps t, l'évolution de l'intensité $J_L$ du rayonnement laser généré par la source en fonction de l'intensité d'un rayonnement de pompage constitué par un échelon, et respectivement, avec une source selon l'état de l'art et avec une source selon l'invention.

- La figure 7 montre l'énergie EL générée par le cristal en fonction de l'énergie fournie par l'échelon, respectivement avec un dispositif selon l'état de la technique (courbe A) et avec un dispositif selon la figure 3 (courbe B),

- La figure 8 montre un schéma d'une source laser selon une seconde variante de réalisation de l'invention,

- La figure 9 montre un schéma d'une variante de réalisation de la figure 8 dans laquelle un obturateur ainsi qu'un expandeur de faisceau ont été ajoutés,

- La figure 10 présente une troisième variante de réalisation de l'invention.

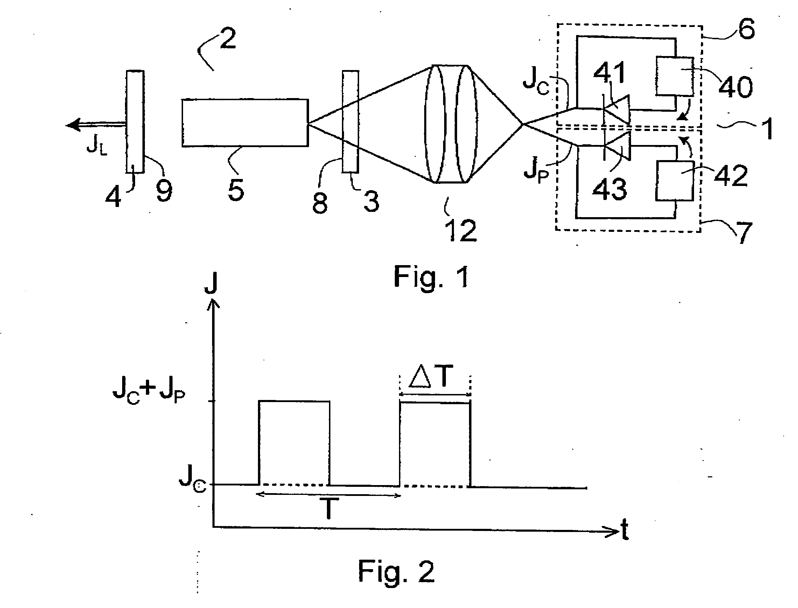

La figure 1 présente une source laser selon un premier mode de réalisation de l'invention qui comporte :

- une cavité laser 2 délimitée par un premier et un second miroirs, respectivement 3 et 4 et à l'intérieur de laquelle est disposé un cristal 5 apte à générer un rayonnement laser,

- des moyens 1 de pompage constitués par des premiers et seconds moyens 6 et 7 de pompage disposés à l'extérieur de la cavité et aptes à générer respectivement un premier et un second rayonnements laser.

Au sein de la cavité laser, le premier miroir 3 disposé du côté des premiers et seconds moyens 6 et 7 de pompage, comporte un revêtement 8 interne à la cavité transparent à la longueur d'onde des dits premier et un second rayonnements laser et réfléchissant à la longueur d'onde du rayonnement laser généré par le cristal.

Le second miroir 4 de la cavité 2, qui est le miroir de sortie, comporte un revêtement 9, interne à la cavité, transparent à la longueur d'onde du rayonnement laser généré par le cristal et réfléchissant à la longueur d'onde des dits premier et second rayonnements laser dans le cas où tout le rayonnement de pompage ne serait pas absorbé par le cristal.

Les premiers moyens 6 de pompage laser, dits auxiliaires, sont aptes à générer un rayonnement continu à une première longueur d'onde de pompage dudit cristal laser 5. Ces premiers moyens 6 de pompage laser sont aptes à maintenir le cristal laser 5 dans un état d'inversion de population correspondant au seuil d'émission laser. Les seconds moyens de pompage laser, dits principaux, sont aptes à générer un rayonnement pulsé à une seconde longueur d'onde de pompage dudit cristal laser 5. Dans cette variante de réalisation de l'invention, les première et seconde longueurs d'onde de pompage sont identiques et le cristal est formé par un barreau.

Ce barreau 5, placé dans la cavité 2 délimitée par les deux miroirs 3 et 4, est pompé optiquement d'une part par le premier rayonnement de pompage généré par les premiers moyens de pompage 6, ce rayonnement ayant, comme montré sur la figure 2, une composante continue d'intensité $J_c$ et, d'autre part, par un second rayonnement de pompage pulsé généré par les seconds moyens de pompage 7 et qui atteint la puissance Jp pendant un durée T , qui se répète avec la période T (rapport cyclique (duty cycle) $\dfrac{\Delta T}{T}$) et qui se superpose au premier rayonnement.

Dans cet exemple de réalisation, les premiers moyens 6 de pompage sont composés par une première alimentation électrique 40 et par une diode 41 de faible puissance, en l'occurrence dont la puissance est de l'ordre de 1 à 10 W, la puissance nécessaire étant fonction des dimensions du cristal et de la cadence de répétition, en l'occurrence la puissance nécessaire étant d'autant plus élevée que la cadence est basse et que le cristal a un volume important, tandis que les second moyens 7 de pompage sont composés par une seconde alimentation électrique 42 et par une diode, une barrette de diodes ou une matrice bidimensionnelle de diodes 43 de puissance, en l'occurrence dont la puissance peut atteindre plusieurs centaines de Watt.

Une optique de collimation/focalisation 12 est disposée entre les moyens de pompage 1 et la cavité 2, et ce, afin de focaliser les rayonnements laser de pompage en direction de l'une des faces du cristal 5.

La figure 2 présente la superposition des premier et second rayonnements laser de pompage générés par les premiers et seconds moyens 6,7 de pompage. Le premier rayonnement est continu d'intensité Jc tandis que le second est pulsé en forme d'échelon d'intensité égale à $J_P$, la durée des impulsions étant égale à T et la période à T.

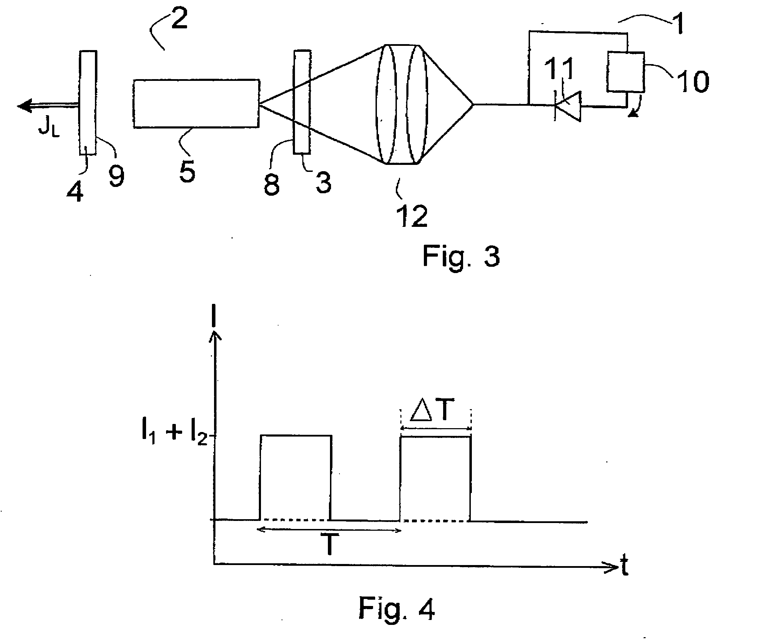

La figure 3 présente un schéma d'un exemple de réalisation des moyens de pompage d'une source selon cette variante de réalisation de l'invention.

La cavité est identique à celle présentée dans le cadre de la figure 1.

Les moyens de pompage 1 sont constitués par un seul générateur électrique 10 connecté électriquement à au moins une diode ou une barrette de diodes ou une matrice bidimensionnelle de diode 11 apte à générer un rayonnement à une longueur d'onde de pompage du cristal 5.

Le générateur électrique 10 est apte à générer, comme montré sur la figure 4, une intensité I en fonction du temps en forme de créneau de durée T et qui se répète avec la période T, l'intensité I2, entre deux créneaux successifs étant différentes de 0 et apte à générer via la diode 11, un rayonnement laser de pompage d'intensité $J_C$ tandis que les créneaux d'intensité I1 sont aptes à générer via la diode 11 un rayonnement laser de pompage d'intensité $J_P$. Ainsi, à l'aide d'une diode 11 associée, le générateur 10 est capable, par mise en forme du courant qu'il génère, de reproduire le profil temporel nécessaire de l'intensité de pompage. Un dispositif optique de collimation/focalisation 12 permet de coupler l'intensité du rayonnement de pompage dans le barreau 5 pour générer l'intensité laser $J_L$ en sortie de la cavité 2.

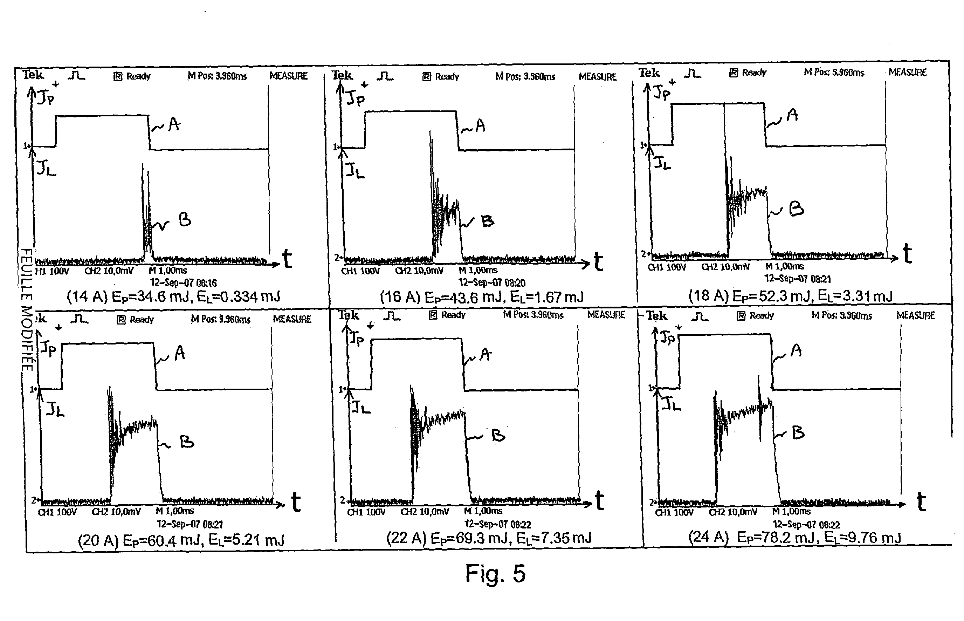

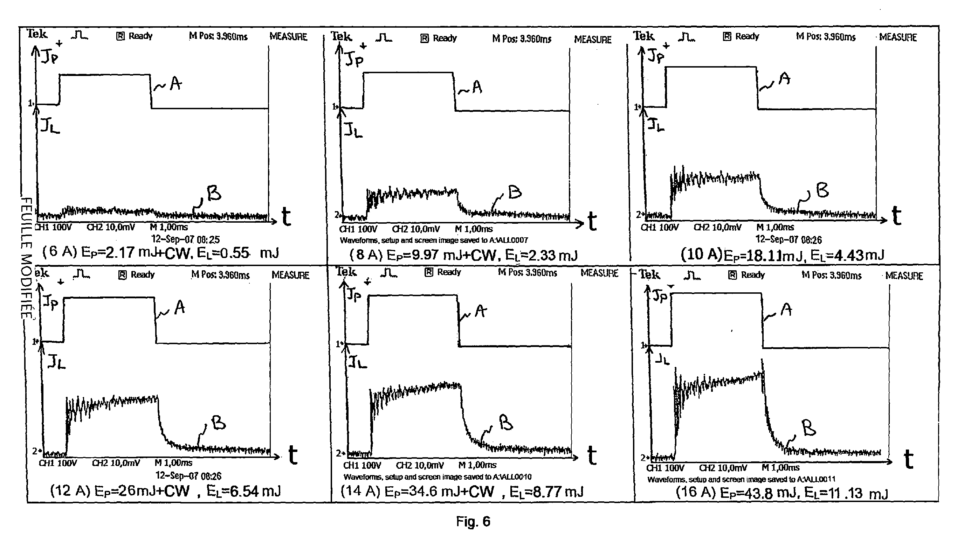

Les figures 5 et 6 présentent, en fonction du temps t, l'évolution de l'intensité $J_L$ du rayonnement laser générée par la source en fonction de l'intensité $J_P$ d'un rayonnement de pompage constitué par un échelon, pour six intensités de pompage différentes et pour une durée du créneau de l'échelon de 4ms et respectivement, avec une source selon l'état de l'art, c'est-à-dire sans génération d'un rayonnement de pompage continu d'intensité Jc avant l'échelon, et avec une source selon l'invention c'est à-dire avec génération d'un rayonnement de pompage continu d'intensité Jc avant l'échelon. Les courbes A et B représentent, de façon synchrone, respectivement l'intensité du rayonnement de pompage constitué par un échelon et l'intensité de l'impulsion laser générée par la source.

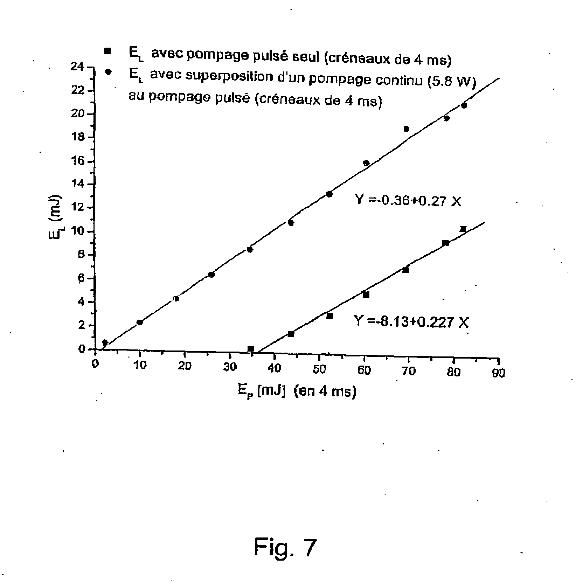

Dans le cadre de la figure 5 utilisant un dispositif selon l'état de la technique, l'intensité $E_P$ du rayonnement de pompage de l'échelon est compris entre 34.6 et 78.2 mJ tandis que celle $E_L$ du rayonnement laser sortant de la cavité est compris entre 0,334 et 9,76mJ. Au niveau de l'impulsion laser d'énergie $E_L$ générée par le cristal, on constate un phénomène d'oscillation/relaxation connu aussi sous le nom de spiking. L'impulsion laser générée commence d'autant plus tardivement par rapport au début de l'échelon, que l'énergie de pompage est faible. Comme on peut le voir sur la figure 7 qui montre l'énergie EL générée par le cristal en fonction de l'énergie fournie par l'échelon, respectivement avec un dispositif selon l'état de la technique (courbe A) et avec un dispositif selon la figure 3 (courbe B), dans le cas de la courbe A, l'énergie de pompage absorbée par le barreau nécessaire pour générer une impulsion laser, donc pour atteindre le seuil d'émission laser, est d'environ 34,5mJ.

Dans le cadre de la figure 6 utilisant une source laser selon la variante de réalisation de l'invention de la figure 3, compte tenu de la présence, en permanence d'un rayonnement de pompage d'intensité Jc permettant l'inversion de population dans le barreau, la génération d'un rayonnement de pompage supplémentaire en créneau même de très faible énergie, permet d'obtenir, pendant toute la durée de ce créneau, une émission laser et permet de réduire considérablement le phénomène d'oscillation relaxation.

Comme le montre la figure 7 courbe B, l'émission laser générée par le barreau se produit dès la fourniture d'une énergie supplémentaire. Ainsi, en fonctionnement par déclenchement, il est possible de déclencher l'impulsion laser à tout moment pendant le créneau ce qui n'est absolument pas possible avec un dispositif selon l'état de l'art puisqu'il est nécessaire d'attendre que le barreau ait absorbé l'énergie nécessaire pour entraîner une inversion de population à l'intérieur du barreau. En outre, il est possible avec une électronique de synchronisation simple et en ne programmant qu'un retard de déclenchement, d'obtenir une parfaite reproductibilité des impulsions laser générées par la source ce qui n'est absolument pas le cas avec une source selon l'état de la technique.

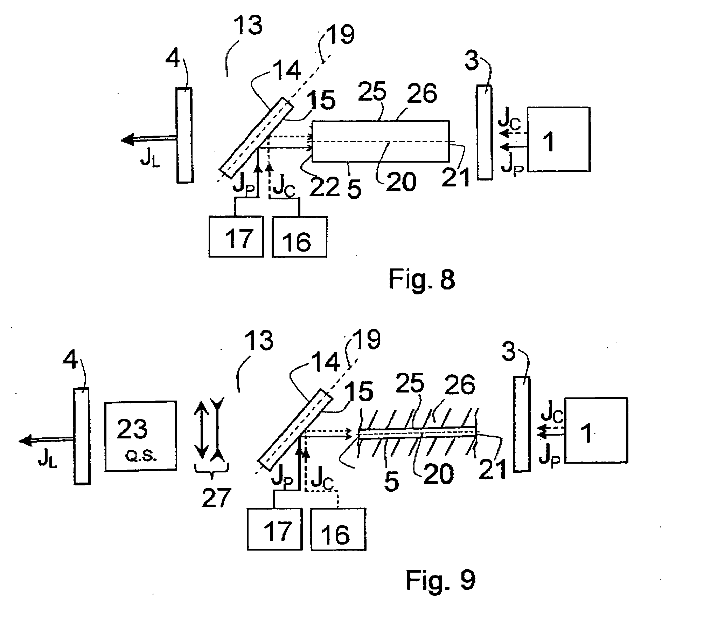

La figure 8 montre un schéma d'une source laser selon une seconde variante de réalisation de l'invention.

Par rapport à celle de la figure 3, la cavité 13 comporte, en outre, une lame séparatrice 14 disposée entre le cristal 5 et le second miroir 4 et dont le plan 19 fait un angle de 45° avec l'axe longitudinal 20 du cristal 5. Cette lame séparatrice 14 comporte un revêtement 15 réfléchissant à la longueur d'onde de pompage et transparent, pour une polarisation (P par exemple) au rayonnement laser généré par le cristal 5.

De plus, cette source laser comporte des troisièmes et quatrièmes moyens 16 et 17 de pompage disposés à l'extérieur de la cavité 13 et aptes à générer respectivement un troisième et un quatrième rayonnements laser de pompage, qui dans cet exemple de réalisation sont identiques, respectivement, auxdits premier et un second rayonnements laser de pompage.

Ces troisièmes et quatrièmes moyens 16 et 17 de pompage sont aptes à générer lesdits troisième et quatrième rayonnements laser de pompage en direction de ladite lame séparatrice 14 et avec un angle de 45° par rapport au plan 19 de la lame 14, de sorte que ces rayonnements soient réfléchis en direction du cristal 5. Dans cet exemple de réalisation ; les troisièmes et quatrièmes moyens 16 et 17 sont identiques aux moyens de pompage 1 de la figure 3, c'est-à-dire constitués d'un générateur 10 et d'une diode ou d'une barrette de diodes ou d'une matrice bidimensionnelle de diodes 11. Toutefois le générateur peut être commun aux moyens de pompage 1 et aux troisièmes et quatrièmes moyens 16 et 17 de pompage,

Ainsi, en mettant en oeuvre la lame séparatrice 14 dans la cavité 13, on peut, pour un cristal laser 5, se présentant par exemple sous la forme d'un barreau, augmenter sa longueur puisqu'il est possible d'effectuer un pompage par ses deux faces latérales 21 et 22. La lame 14 réfléchit totalement le rayonnement de pompage d'intensité $J_C + J_P$ tandis qu'elle transmet totalement le rayonnement laser de polarisation P en direction du miroir 4 de sortie.

Comme montré sur la figure 9 sur laquelle le cristal laser 5 est représenté sous la forme d'un barreau 5, on peut également, par rapport à la figure 8, placer un obturateur 23 (Q-Switch) entre la lame séparatrice 14 et le miroir de sortie 4 de façon à pouvoir passer d'un mode de fonctionnement relaxé au mode déclenché.

De plus, pour permettre au mieux d'évacuer la chaleur développée dans le barreau, et accroître la surface d'échange du barreau par rapport à son volume, le barreau 5 de diamètre équivalent au diamètre du mode fondamental dans la cavité 13, et de longueur correspondant environ à deux fois la longueur d'absorption due au dopage en ions actifs (environ 100 nm pour un dopage de 2% de thulium dans du YAG et une longueur d'onde de pompage de 805 nm) est réalisé avec sa face longitudinale 25 polie et placée dans un liquide de refroidissement 26 de façon à servir de guide d'ondes pour la pompe et l'émission laser. En outre, un expandeur de faisceau 27 est, par rapport à la figure 8, disposé entre la lame séparatrice 14 et l'obturateur 23. Cet expandeur de faisceau permet à la fois de réduire la densité de puissance à l'entrée du système de déclenchement et de corriger l'effet de la lentille thermique.

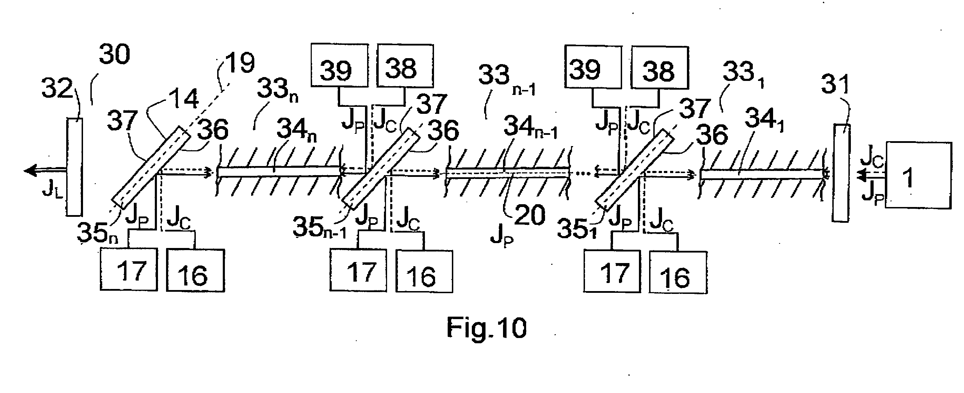

La longueur d'un barreau étant limitée par le coefficient d'absorption du rayonnement de pompage pour un dopage en ions donné, l'accroissement de longueur du milieu amplificateur peut se faire en mettant en série plusieurs barreaux. La figure 10 présente une telle source. La cavité 30 comporte, dans cet exemple de réalisation un premier et un second miroir 31, 32, le second miroir 32 étant le miroir de sortie de la cavité 30. Entre le premier et le second miroirs 31, 32 sont disposés plusieurs ensembles successifs $33_1$ à $33_n$ constitués chacun par un barreau 34 et une lame séparatrice 35 et dont seulement trois sont représentés. Chacune de ces lames $35_1$ à $35_n$ est inclinée d'un angle de 45° par rapport à l'axe longitudinal 20 du ou des barreaux qui lui sont associés et comporte, sur chacune de ses première et deuxième faces principales 36, 37, un revêtement réfléchissant à la longueur d'onde de pompage et transparent, pour une polarisation (P par exemple), au rayonnement laser généré par le cristal. Il est à noter que la dernière lame $35_n$ peut ne pas avoir de revêtement du côté du miroir de sortie puisqu'il n'est pas en regard avec un barreau.

Pour chacune des lames $33_i$, excepté ladite dernière $35_n$, sont associés d'une part, les troisième et quatrième moyens 16 et 17 de pompage aptes à générer lesdits troisième et quatrième rayonnements laser de pompage en direction de ladite première face principale 36 de lame séparatrice $35_i$ et avec un angle de 45° par rapport au plan 19 de cette lame, de sorte que ces rayonnements soient réfléchis en direction du barreau associé $34_i$ du même ensemble que cette lame et, d'autre part, des cinquièmes et sixièmes moyens de pompage 38 et 39 de pompage aptes à générer des cinquième et sixième rayonnements laser de pompage en direction de ladite deuxième face principale 37 de lame séparatrice $35_i$ et avec un angle de 45° par rapport au plan 19 de cette dernière, de sorte que ces rayonnements soient réfléchis en direction du barreau $34_{i+1}$ de l'ensemble suivant.

Dans cet exemple de réalisation ; les cinquièmes et sixièmes moyens de pompage 38 et 39 sont identiques aux moyens de pompage 1 de la figure 3, c'est-à-dire constitués d'un générateur 10 et d'une diode ou d'une barrette de diodes ou d'une matrice bidimensionnelle de diodes 11. De plus, les cinquième et sixième rayonnements laser de pompage sont identiques, respectivement, auxdits premier et un second rayonnements laser de pompage. Toutefois le générateur peut être commun aux moyens de pompage 1, aux troisièmes et quatrièmes moyens 16 et 17 de pompage et aux cinquièmes et sixièmes moyens de pompage 38 et 39.

Une source laser haute énergie peut être obtenue avec un tel dispositif et, du fait de l'apparition d'un créneau de rayonnement laser généré par chaque barreau dès le début de l'émission des créneaux du rayonnement laser de pompe, le fonctionnement en mode de déclenchement ne nécessite pas l'utilisation de moyens complémentaires de détection d'oscillation comme dans le cas de l'état de la technique.

Bien entendu, de nombreuses modifications peuvent être apportées à l'exemple de réalisation précédemment décrit sans sortir du cadre de l'invention. Ainsi, les premier et second, troisième et quatrième et/ou cinquième et sixième moyens de pompage peuvent émettre des rayonnements respectifs à des longueurs différentes et réparties dans le spectre d'absorption de l'ion actif utilisé dans le cristal et les moyens de pompage peuvent comporter des diodes ou tout autre source laser continue ou pulsée.

Par ailleurs, le déclencheur peut être actif ou passif tandis que le liquide de refroidissement peut être de l'eau ou tout autre fluide comportant des propriétés thermiques adéquates.

De plus, le cristal laser peut notamment être constitué par l'un des cristaux suivants : YAG, YALO, $YVO_4$ ou YLF dopé au thulium ou à l'holmium

**Revendications**

1. Procédé d'émission d'un rayonnement laser pulsé généré par au moins un cristal laser (5) disposé dans une cavité (2, 13) comportant un premier et un second miroirs (3, 4) et pompé par des moyens de pompage (1), **caractérisé en ce qu'**il comporte une première étape consistant à générer un premier rayonnement laser de pompage d'intensité $J_C$ apte à amener le cristal (5) au moins au seuil d'émission laser et une seconde étape consistant à générer un second rayonnement laser de pompage d'intensité Jp en forme d'échelon, ce deuxième rayonnement se superposant, au moins en partie au premier ou lui succédant immédiatement après, l'intensité $J_P$ étant, dans ce dernier cas, supérieure à celle $J_C$ du premier rayonnement.

2. Procédé d'émission laser selon la revendication 1, **caractérisé en ce que** la seconde étape consiste à superposer un second rayonnement laser de pompage d'intensité $J_P$ en forme d'échelon au premier rayonnement

3. Procédé selon la revendication 2, **caractérisé en ce que** les premier et second rayonnements ont des longueurs d'onde différentes.

4. Source laser apte à générer des impulsions laser comportant des moyens de pompage (1, 16, 17, 38, 39) aptes à pomper un cristal laser (5) disposé dans une cavité (2, 13) délimitée par un premier et un second miroir (3, 4), les moyens de pompage (1, 16, 17, 38, 39) étant aptes à générer un rayonnement laser de pompage d'intensité $J_P$ en forme d'échelon, **caractérisé en ce que** les moyens de pompage (1, 16, 17, 38, 39) sont aptes à générer un premier rayonnement laser de pompage d'intensité $J_C$ apte à amener le cristal au moins au seuil d'émission laser et une seconde étape consistant à générer un second rayonnement laser de pompage d'intensité $J_P$ en forme d'échelon, ce deuxième rayonnement se superposant, au moins en partie au premier ou lui succédant immédiatement après, l'intensité $J_P$ étant, dans ce dernier cas, supérieure à celle $J_C$ du premier rayonnement.

5. Source laser selon la revendication 4, **caractérisée en ce que** les moyens de pompage (1, 16, 17, 38, 39) comporte des premiers moyens (16, 38) de pompage auxiliaires aptes à générer le premier rayonnement et des seconds moyens (17, 39) de pompage principaux aptes à générer ledit second rayonnement de pompage en forme d'échelon.

6. Source laser selon l'une quelconque des revendications 4 et 5, **caractérisée en ce que** les premiers moyens de pompage (16, 38) sont aptes à générer un premier rayonnement laser de pompage continu.

7. Source laser selon l'une quelconque des revendication 4 à 6, **caractérisée en ce que** les moyens de pompage (1, 16, 17, 38, 39) comportent au moins une diode laser.

8. Source laser selon l'une quelconque des revendications 4 et 5, **caractérisée en ce que** les premiers et seconds moyens de pompage (16, 17, 38, 39) sont aptes à générer des premier et second rayonnements laser de pompage ayant des longueurs d'onde différentes.

9. Source laser selon la revendication 9, **caractérisée en ce que** le cristal comporte au moins trois faces et **en ce que** les moyens de pompages (1, 16, 17, 38, 39) comportent des premier et second moyens de pompages (1) aptes à générer lesdits premier et second rayonnements de pompage en direction d'une première face (21) dudit cristal et au moins des troisième moyens (16, 17) de pompage aptes à générer au moins un troisième rayonnement de pompage en direction d'une seconde face (22) dudit cristal (5).

10. Source laser selon la revendication 9, **caractérisée en ce qu'**une lame séparatrice comportant au moins un face principale recouverte par un revêtement réfléchissant à ou aux longueurs d'onde des rayonnements de pompage et transparent pour une polarisation du rayonnement laser généré par le cristal, est disposée à l'intérieur de la cavité et apte à diriger ledit au moins troisième rayonnement laser en direction de ladite deuxième face du cristal

11. Source laser selon l'une quelconque des revendications 4 à 8, **caractérisée en ce que** la cavité comporte plusieurs cristaux laser, chaque cristal ayant par exemple la forme d'un barreau.

12. Source laser selon les revendications 10 et 11, **caractérisée en ce que** la cavité comporte plusieurs ensembles (33i) composés par un cristal (34i) et une lame séparatrice (35i), cette dernière comportant au moins un face principale (36) recouverte par un revêtement réfléchissant à ou aux longueurs d'onde des rayonnements de pompage et transparent, pour une polarisation, au rayonnement laser généré par le cristal.

13. Source laser selon l'une quelconque des revendications 4 à 12, **caractérisée en ce que** le cristal (5,34i) est constitué par l'un des cristaux suivants : YAG, YALO, YVO$_4$ ou YLF dopé au thulium ou à l'holmium.

EP 2 133 964 A1

$J_L$

2

$J_C$  41  40

6

1

$J_P$  43  42

7

4  9  5  8  3  12

Fig. 1

$J$

$J_C + J_P$

$\Delta T$

$J_C$

$T$

$t$

Fig. 2

Fig. 3

Fig. 4

EP 2 133 964 A1

Fig. 5

FEUILLE MODIFIÉE

FEUILLE MODIFIÉE

Tek ⬚ Ready M Pos: 3.960ms MEASURE

$J_P$
A
$J_L$
B
t

CH1 100V CH2 10,0mV M 1,00ms
12-Sep-07 08:25

(6 A) $E_P$=2.17 mJ+CW, $E_L$=0.55 mJ

Tek ⬚ Ready M Pos: 3.960ms MEASURE

$J_P$
A
$J_L$
B
t

CH1 100V CH2 10,0mV M 1,00ms
Waveforms, setup and screen image saved to A:\ALL0007

(8 A) $E_P$=9.97 mJ+CW, $E_L$=2.33 mJ

Tek ⬚ Ready M Pos: 3.960ms MEASURE

$J_P$
A
$J_L$
B
t

CH1 100V CH2 10,0mV M 1,00ms
12-Sep-07 08:26

(10 A) $E_P$=18.11mJ, $E_L$=4.43mJ

Tek ⬚ Ready M Pos: 3.960ms MEASURE

$J_P$
A
$J_L$
B
t

CH1 100V CH2 10,0mV M 1,00ms
12-Sep-07 08:26

(12 A) $E_P$=26mJ+CW, $E_L$=6.54mJ

Tek ⬚ Ready M Pos: 3.960ms MEASURE

$J_P$
A
$J_L$
B
t

CH1 100V CH2 10,0mV M 1,00ms
Waveforms, setup and screen image saved to A:\ALL0010

(14 A) $E_P$=34.6 mJ+CW, $E_L$=8.77 mJ

Tek ⬚ Ready M Pos: 3.960ms MEASURE

$J_P$
A
$J_L$
B
t

CH1 100V CH2 10,0mV M 1,00ms
Waveforms, setup and screen image saved to A:\ALL0011

(16 A) $E_P$=43.8 mJ, $E_L$=11.13 mJ

Fig. 6

$E_L$ avec pompage pulsé seul (créneaux de 4 ms)

$E_L$ avec superposition d'un pompage continu (5.8 W) au pompage pulsé (créneaux de 4 ms)

$Y = -0.36 + 0.27\ X$

$Y = -8.13 + 0.227\ X$

$E_P$ [mJ] (en 4 ms)

$E_L$ (mJ)

Fig. 7

Fig. 8

Fig. 9

Fig.10

Europäisches
Patentamt

European
Patent Office

Office européen
des brevets

**RAPPORT DE RECHERCHE EUROPEENNE**

Numéro de la demande

EP 09 00 0557

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 214 666 A (WATANABE MITSUYOSHI [JP] ET AL) 25 mai 1993 (1993-05-25) | 1,2,4-7, 10,12 | INV. H01S3/102 |
| A | * colonne 1, ligne 17-26 * | 3,8,9, 11,13 | H01S3/094 H01S3/16 |
| | * colonne 2, ligne 57-64; figure 1 *<br>----- | | |
| A | SAISSY A ET AL: "FLUORESCENCE IN DUAL-WAVELENGTH PUMPED HO3+-FLUOROZIRCONATE FIBERS" JOURNAL OF LIGHTWAVE TECHNOLOGY, IEEE SERVICE CENTER, NEW YORK, NY, US, vol. 9, no. 11, 1 novembre 1991 (1991-11-01), pages 1467-1470, XP000243349 ISSN: 0733-8724 * abrégé; figure 1 *<br>----- | 1,3,8 | |
| A | US 2006/165134 A1 (TABIRIAN ANNA M [US] ET AL TABIRIAN ANNA M [US] ET AL) 27 juillet 2006 (2006-07-27) * abrégé; figures 1-8 *<br>----- | 1,3,4,8, 13 | |
| A | KIM H-J ET AL: "ACTIVE TWO-PULSE SUPERPOSITION TECHNIQUE OF A PULSED ND:YAG LASER" OPTICAL ENGINEERING, SOC. OF PHOTO-OPTICAL INSTRUMENTATION ENGINEERS. BELLINGHAM, vol. 37, no. 6, 1 juin 1998 (1998-06-01), pages 1780-1784, XP000776968 ISSN: 0091-3286 * le document en entier *<br>----- | 1-12 | DOMAINES TECHNIQUES RECHERCHES (IPC)<br>H01S |
| A | EP 0 332 836 A (AESCULAP WERKE AG [DE]) 20 septembre 1989 (1989-09-20) * le document en entier *<br>----- | 1,4 | |
| P,X | DE 10 2006 051368 A1 (LASER OPTOELEKTRONIK GMBH Z [DE]) 30 avril 2008 (2008-04-30) * alinéa [0005] *<br>----- | 1,4 | |

Le présent rapport a été établi pour toutes les revendications

| Lieu de la recherche | Date d'achèvement de la recherche | Examinateur |
|---|---|---|
| La Haye | 10 novembre 2009 | Claessen, Michiel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 00 0557

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-11-2009

| Document brevet cité au rapport de recherche | | Date de publication | Membre(s) de la famille de brevet(s) | | Date de publication |
|---|---|---|---|---|---|
| US 5214666 | A | 25-05-1993 | JP | 3064342 B2 | 12-07-2000 |
| | | | JP | 4071281 A | 05-03-1992 |
| US 2006165134 | A1 | 27-07-2006 | AUCUN | | |
| EP 0332836 | A | 20-09-1989 | DE | 3808378 A1 | 21-09-1989 |
| DE 102006051368 | A1 | 30-04-2008 | AUCUN | | |

EPO FORM P0460

Pour tout renseignement concernant cette annexe : voir Journal Officiel de l'Office européen des brevets, No.12/82